# FASCICULE DE BREVET EUROPEEN

(11) **EP 1 623 899 B1**
(45) Date de publication et mention de la délivrance du brevet: **09.04.2008**
(21) Numéro de dépôt: 05291574.1
(22) Date de dépôt: 22.07.2005
(51) Int. Cl.: B60T 7/06

(54) **Structure de pédalier pour un véhicule automobile**
Pedalaufbau für ein Kraftfahrzeug
Pedal structure for a motor vehicle

(30) Priorité: 28.07.2004 FR 0408342
(43) Date de publication de la demande: 08.02.2006
(73) Titulaire: Peugeot Citroen Automobiles SA, 78140 Vélizy-Villacoublay (FR)
(72) Inventeur: Becue, Xavier, 51110 Aumenancourt (FR); Robillard, Sylvain, 02360 Raillimont (FR); Bernaudin, Matthieu, 75015 Paris (FR); Chan-Ng-Yok, Laurent, 92800 Puteaux (FR)
(74) Mandataire: Lanceplaine, Jean-Claude

(56) Documents cités:
- EP-A- 0 873 923
- EP-A- 0 928 727
- FR-A- 2 835 796

## Description

La présente invention concerne une structure de pédalier pour un véhicule automobile.

Les véhicules automobiles comportent un pédalier fixé à la structure du véhicule et qui comprend au moins une pédale de frein et le plus souvent, une pédale d'embrayage. Les pédales sont montées pivotantes autour d'un axe horizontal et sont reliées chacune à une tige de commande respectivement des freins et de l'embrayage.

Dans le but d'augmenter la sécurité des occupants, les constructeurs équipent de plus en plus les véhicules, de systèmes de sécurité comme par exemple de coussin gonflables et également de pédaliers rétractables.

En effet, lors d'un choc frontal, la structure du véhicule et donc le tablier de support du pédalier, se déforme et entraîne une remontée de l'ensemble du pédalier dans les jambes du conducteur en occasionnant des lésions aux membres inférieurs pouvant être importantes.

Pour cela, on connaît par exemple du document FR 2 835 796 A- des dispositifs d'escamotage du pédalier qui comprennent des moyens de détection du rapprochement d'au moins une pédale vers le conducteur et qui sont associés à des moyens de désaccouplement de la ou des pédales de la tige de commande respective à partir d'un seuil de recul prédéterminé. Mais, ces dispositifs sont complexes à mettre en oeuvre et ne donnent pas entièrement satisfaction.

L'invention a pour but d'éviter ces inconvénients en proposant une structure de pédalier rétractable, simple à mettre en oeuvre, et qui permet de limiter la remontée de chaque pédale en cas de choc frontal et ainsi d'améliorer la protection du conducteur.

L'invention a donc pour objet une structure de pédalier pour un véhicule automobile, du type comprenant :
- un support de pédalier monté sur un tablier du véhicule,
- un levier de commande d'une pédale de frein et/ou d'embrayage, monté articulé sur ledit support et comportant un axe de rotation horizontal, et
- un flasque de renvoi solidaire d'une tige de commande des freins ou de l'embrayage et monté sur ledit axe,
caractérisée en ce qu'elle comprend aussi :
- des moyens d'entraînement en rotation du flasque de renvoi par le levier de commande,
- des moyens de solidarisation en translation latérale parallèlement à l'axe de rotation du levier de commande avec le flasque de renvoi, ces moyens de solidarisation étant indépendants des moyens d'entraînement en rotation, et
- des moyens de désolidarisation du levier de commande et du flasque de renvoi en cas de choc frontal, par translation latérale de ce flaque pour amener le levier de commande et la pédale à basculer vers l'avant du véhicule.

Selon d'autres caractéristiques de l'invention :
- les moyens d'entraînement en rotation sont formés par un moyeu placé sur l'axe de rotation et reliant ledit levier de commande audit flasque de renvoi, la longueur du moyeu à l'intérieur du flasque de renvoi étant inférieure à la course de translation latérale de ce flasque de renvoi,
- les moyens d'entraînement en rotation sont formés par une butée solidaire du levier de commande et en appui sur un bord latéral du flasque de renvoi lors de la rotation de ce levier de commande et de ce flasque de renvoi dans un sens d'actionnement de la tige de commande, l'épaisseur de la butée étant inférieure à la course de translation latérale de ce flasque de renvoi,
- les moyens d'entraînement en rotation sont formés par une tige transversale, parallèle à l'axe de rotation, dont une première extrémité de cette tige est solidaire du levier de commande et dont une seconde extrémité est engagée dans un orifice ménagé dans le flasque de renvoi, la longueur d'engagement de cette seconde extrémité étant inférieure à la course de translation latérale de ce flasque de renvoi,
- les moyens de solidarisation en translation latérale comprennent, d'une part, un basculeur comportant un flasque monté libre en rotation sur ledit axe de rotation et muni d'un bras radial destiné à coopérer, lors d'un choc frontal, avec une pièce fixe solidaire de la structure du véhicule et, d'autre part, d'un système de serrage du levier de commande entre le flasque du basculeur et le flasque de renvoi,
- le basculeur est déplaçable, lors d'un choc frontal, par pivotement autour de l'axe de rotation par la pièce fixe entre une position de blocage du levier de commande entre le flasque du basculeur et le flasque de renvoi et une position de libération de ce levier de commande,
- le système de serrage comprend au moins un organe de vissage transversal, parallèle à l'axe de rotation et formé par une tige munie, à une première extrémité, d'une portion filetée vissée dans le flasque du basculeur et, à une seconde extrémité, d'une tête appliquée sur la face extérieure du flasque de renvoi,
- les moyens de désolidarisation du levier de commande et du flasque de renvoi comprennent, d'une part, au moins une lumière ménagée dans le flasque de renvoi, traversée par la tige de l'organe de vissage et comportant une première portion de largeur inférieure à la largeur de la tête de cet organe de vissage et une seconde portion de largeur supérieure à ladite tête et, d'autre part, au moins un élément d'écartement du flasque de renvoi parallèlement à l'axe de rotation,
- les moyens de désolidarisation comprennent, de préférence, deux lumières ménagées dans le flasque de renvoi et traversées chacune par la tige d'un organe de vissage, lesdites lumières étant disposées de part et d'autre de l'axe de rotation,
- ladite au moins lumière a la forme d'un arc de cercle dont le centre est situé sur l'axe de rotation,
- ledit élément d'écartement du flasque de renvoi est formé par au moins une rampe et une contre-rampe ménagées sur les faces en regard respectivement du flasque du basculeur et du flasque de renvoi et coopérant l'une avec l'autre lors du pivotement de ce basculeur,
- ledit élément d'écartement du flasque de renvoi est formé par au moins un organe élastique, comme par exemple un ressort de compression, interposé entre le levier de commande et le flasque de renvoi,
- le basculeur comporte une partie de liaison fusible avec le levier de commande,
- le basculeur, le levier de commande et le flasque de renvoi sont réalisés en matière plastique.

D'autres caractéristiques et avantages de l'invention apparaîtront à la lecture de la description qui va suivre, donnée à titre d'exemple et faite en référence aux dessins annexés, sur lesquels :
- la Fig. 1 est une vue schématique en perspective d'une structure de pédalier, conforme à l'invention,
- la Fig. 2 est une vue schématique en perspective de la structure de pédalier de la Fig. 1 à l'état désolidarisé des différents éléments de cette structure après un choc frontal du véhicule,
- la Fig. 3 est une vue schématique en perspective du basculeur de la structure de pédalier, conforme à l'invention,
- la Fig. 4 est une vue schématique en perspective du flasque de renvoi de la structure de pédalier, conforme à l'invention,
- la Fig. 5 est une vue schématique en perspective des moyens du système de serrage du levier de commande entre le basculeur et le flasque de renvoi de la structure de pédalier, conforme à l'invention,
- les Figs. 6A à 6C sont des vues schématiques en élévation de la structure de pédalier conforme à l'invention montrant les différentes étapes de désolidarisation du levier de commande de la pédale de la structure de pédalier, conforme à l'invention,
- la Fig. 7 est une vue schématique en perspective d'une première variante des moyens d'entraînement en rotation du flasque de renvoi par le levier de commande de la structure de pédalier, conforme à l'invention, et
- les Figs. 8A et 8B sont deux vues schématiques en perspective d'une seconde variante des moyens d'entraînement en rotation du flasque de renvoi par le levier de commande de la structure de pédalier, conforme à l'invention.

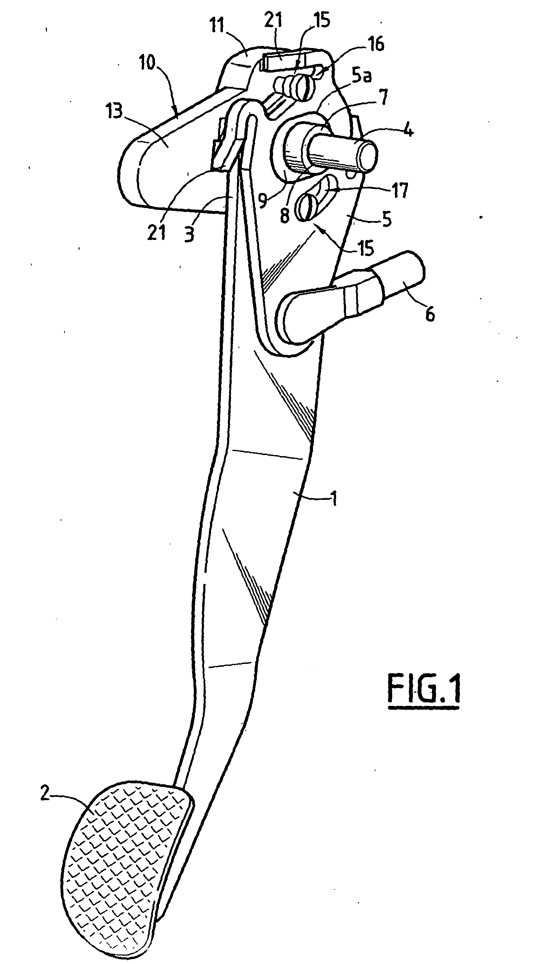

Sur la Fig. 1, on a représenté schématiquement une structure de pédalier qui comporte, de manière classique, un levier de commande 1 d'une pédale 2 de frein et/ou d'embrayage montée articulée sur un support de pédalier relié à un tablier de véhicule, non représenté.

Dans ce qui suit, la description sera faite pour un levier de commande 1 d'une pédale 2 de frein ou d'embrayage, étant bien entendu que cette expression couvre le cas où l'on prévoit à la fois un levier de commande de la pédale de frein et un levier de commande de la pédale d'embrayage, ou seulement le levier de commande de la pédale de frein ou d'embrayage.

Ainsi que représenté sur cette Fig. 1, le levier de commande 1 supporte, à sa partie inférieure, la pédale 2 et comporte, à sa partie supérieure, un flasque 3 qui est monté libre en rotation sur un axe de rotation 4 horizontal. Cet axe de rotation 4 constitue l'axe commun de la structure de pédalier.

La structure de pédalier comporte aussi un flasque de renvoi 5 qui est monté libre en rotation sur l'axe horizontal 4 et qui est relié à une tige de commande 6 agissant, de manière connue, sur le système de frein ou d'embrayage, non représenté.

D'une manière générale, la structure de pédalier conforme à l'invention comporte également :
- des moyens d'entraînement en rotation du flasque de renvoi 5 par le levier de commande 1,
- des moyens de solidarisation en translation latérale parallèlement à l'axe de rotation 4 du levier de commande 1 avec le flasque de renvoi 5, et
- des moyens de désolidarisation du levier de commande 1 et du flasque de renvoi 5 en cas de choc frontal par translation latérale de ce flasque de renvoi 5 pour amener le levier de commande 1 et la pédale 2 à basculer vers l'avant du véhicule automobile, comme on le verra ultérieurement.

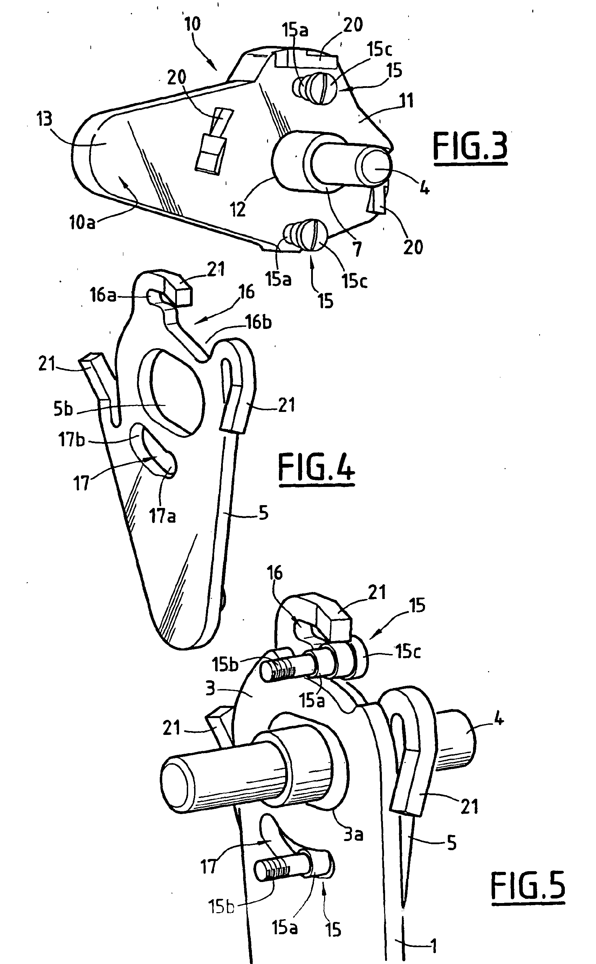

Selon un premier mode de réalisation représenté sur les Figs. 1 à 5, les moyens d'entraînement en rotation du flasque de renvoi 5 par le levier de commande 1 sont formés par un moyeu 7 monté libre en rotation sur l'axe 4 et qui comporte, à cet effet, un orifice central 8 pour le passage de l'axe 4 et une partie externe 9 de solidarisation en rotation du flasque 3 du levier de commande 1 et du flasque de renvoi 5 avec le moyeu 7. Dans l'exemple de réalisation représenté sur les Figs. 1 à 5, la partie externe 9 présente une section transversale de forme oblongue qui coopère avec un orifice axial 5a également de forme oblongue, ménagé dans le flasque de renvoi 5 (Figs. 1 et 4) et avec un orifice 3a aussi de forme oblongue, ménagé dans le flasque 3 du levier de commande 1 (Fig. 5). Ainsi, le levier de commande 1, le flasque de renvoi 5 et le moyeu 7 forment un ensemble solidaire en rotation.

Ainsi que montré sur les Figs. 1 à 3, les moyens de solidarisation en translation latérale parallèlement à l'axe 4 du levier de commande 1 avec le flasque de renvoi 5 sont formés par un basculeur désigné dans son ensemble par la référence 10 comprenant, d'une part, un flasque 11 muni d'un orifice cylindrique 12 de diamètre sensiblement égal au diamètre du moyeu 7 et, d'autre part, un bras radial 13. Ainsi, le basculeur 10 est monté libre en rotation sur le moyeu 7 et, de ce fait, sur l'axe de rotation 4.

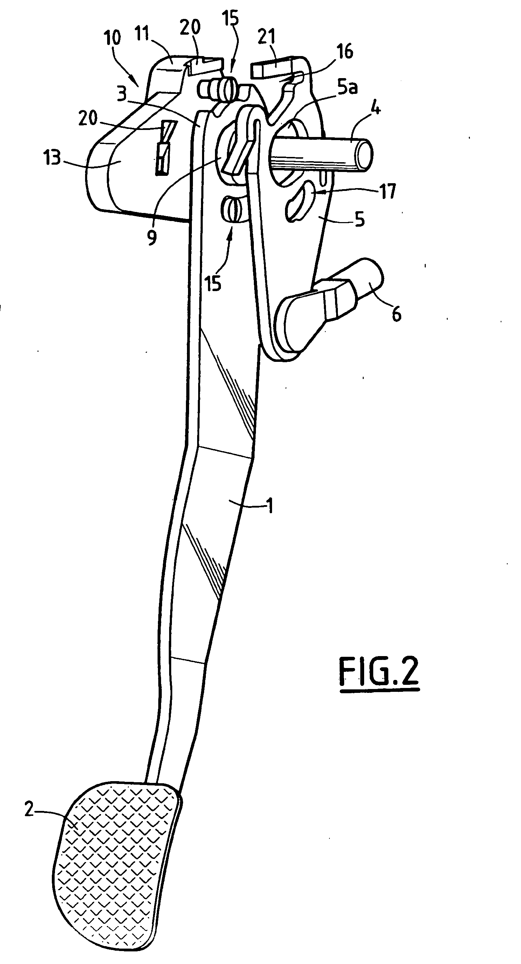

Comme on le voit sur les Figs. 1 et 2, le flasque 3 du levier de commande 1 est placé entre le flasque de renvoi 5 et le basculeur 10.

Les moyens de solidarisation en translation latérale comprennent aussi un dispositif de serrage du flasque 3 du levier de commande 1 entre le flasque 11 du basculeur 10 et le flasque de renvoi 5.

D'une manière générale, le système de serrage comprend au moins un organe de vissage 15 parallèle à l'axe de rotation 4 et, de préférence, deux organes de vissage 15 transversales comportant chacun, comme montré sur les Figs. 1, 3 et 5, une tige 15a munie, à une première extrémité, d'une portion filetée 15b vissée dans le flasque 11 du basculeur 10 et, à une seconde extrémité, d'une tête 15c appliquée sur la faxe externe du flasque de renvoi 5.

Les moyens de désolidarisation du levier de commande 1 et du flasque de renvoi 5 comprennent, tout d'abord, au moins une lumière et de préférence deux lumières 16 et 17 ménagées dans le flasque de renvoi 5, comme montré sur les Figs. 1, 2, 4 et 5.

Comme on le voit sur ces figures, les lumières 16 et 17 sont situées de part et d'autre de l'orifice 5a du flasque de renvoi 5, c'est à dire de part et d'autre de l'axe de rotation 4.

Ainsi que montré sur les Figs. 4 et 5, la lumière 16 située au-dessus de l'orifice oblong 5a du flasque de renvoi 5 est traversée par la tige 15a d'un organe de vissage 15 et comporte une première portion 16a de largeur inférieure à la largeur de la tête 15c de l'organe de vissage correspondant et une seconde portion 16b de largeur supérieure à ladite tête 15c de cet organe de vissage 15.

De même, la lumière 17 située au-dessous de l'orifice oblong 5a du flasque de renvoi 5 est traversée par la tige 15a de l'organe de vissage 15 correspondant et comporte une première portion 17a de largueur inférieure à la largeur de la tête 15c de cet organe de vissage 15 et une seconde portion 17b de largeur supérieure à ladite tête 15c.

Les portions 16a et 17a de largeur inférieure à la largeur de la tête 15c de l'organe de vissage 15 des lumières, respectivement 16 et 17, sont diamétralement opposées, c'est à dire qu'en regardant la face externe du flasque de renvoi 5 opposée à celle en contact avec le flasque 3 du levier de commande 1, la portion 16a de la lumière 16 est située à droite de cette lumière 16 et la portion 17a de la lumière 17 est située à gauche de cette lumière 17.

Ainsi, au cours d'un déplacement en rotation du basculeur 10 autour de l'axe 4 dans un sens de rotation anti-horaire, comme on le verra ultérieurement, l'organe de vissage 15 de la lumière 16 se déplace de la droite vers la gauche et l'organe de vissage 15 de la lumière 17 se déplace de la gauche vers la droite.

Enfin, les lumières 16 et 17 ont chacune la forme d'un arc de cercle dont le centre est situé sur l'axe de rotation 4.

Les moyens de désolidarisation du levier de commande 1 et du flasque de renvoi 5 par translation latérale de ce flasque de renvoi 5 sur l'axe de rotation 4 comprennent au moins un élément d'écartement de ce flasque de renvoi parallèlement audit axe de rotation 4 formé, de préférence, par un système coopérant à rampes et contre-rampes.

Ainsi que montré sur la Fig. 3, la face 10a du basculeur 10 en regard avec le flasque de renvoi 5 comporte des ergots 20 de préférence aux nombre de trois en forme de rampe.

De même, le flasque de renvoi 5 est pourvu, à sa périphérie, de pattes 21, de préférence aux nombre de trois et dont les extrémités sont recourbées en direction de la face 10a du basculeur 10 pour former des contre-rampes coopérant chacune directement avec une rampe 20 du basculeur 10.

Selon une variante non représentée, les moyens de désolidarisation du levier de commande 1 et du flasque de renvoi 5 sont formés par au moins un organe élastique, comme par exemple un ressort de compression interposé entre ce levier de commande 1 et ce flasque de renvoi 5.

La structure de pédalier telle que précédemment décrite fonctionne de manière classique en l'absence d'un choc frontal du véhicule automobile.

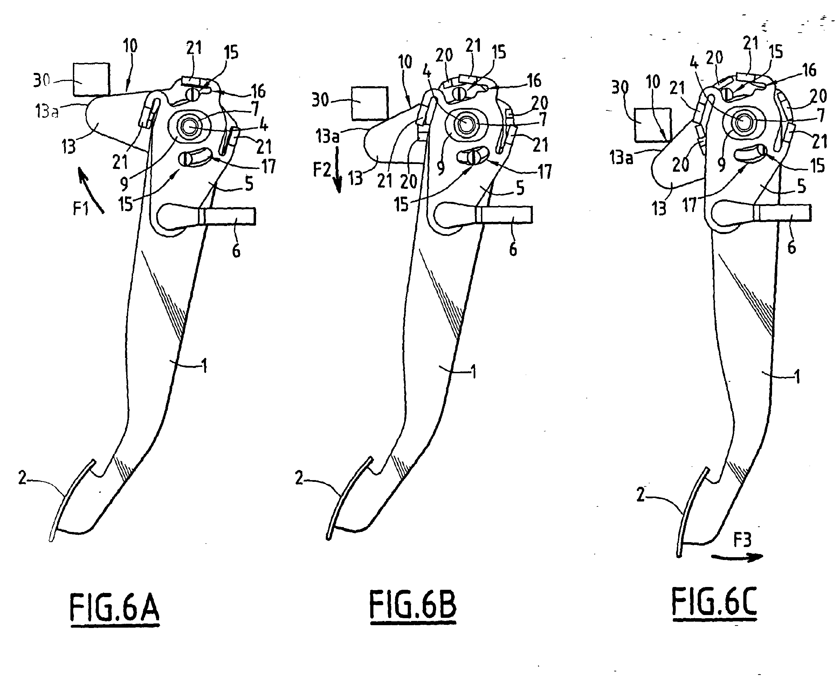

Ainsi, le levier de commande 1 de la pédale 2 de frein ou d'embrayage sur laquelle appuie le conducteur, entraîne en rotation le flasque de renvoi 5 qui commande le système de freins ou d'embrayage par l'intermédiaire de la tige de commande 6. Le basculeur 10 est alors entraîné librement en rotation par ce mouvement et les efforts appliqués par les organes de vissage 15 sur le flasque 3 du levier de commande 1 par serrage de ce flasque 3 entre le flasque de renvoi 5 et le flasque 11 du basculeur 10 sont transmis à l'ensemble de ces éléments qui les solidarise entre eux, comme montré sur les Figs. 1 et 6A.

Au contraire, lors d'un choc frontal du véhicule, le support de colonne représenté schématiquement sur les Figs. 6A à 6B et désigné par la référence 30, qui sert à maintenir la colonne de direction par rapport à la traverse de planche de bord, subit une déformation ou un recul quasi-nul ou relativement faible au regard de la déformation ou du recul subit par le tablier qui est une paroi reliant la traverse de planche de bord au soubassement du véhicule et qui supporte le pédalier.

De ce fait, le recul du tablier lors d'un choc frontal entraîne du même coup le recul du pédalier avec les inconvénients mentionnés précédemment en l'absence de la structure de pédalier, conforme à l'invention.

Le recul du pédalier entraîne l'extrémité libre 13a du bras 13 du basculeur 10 à venir buter contre un élément fixe de la structure du véhicule et notamment contre le support de colonne 30 par la remontée du levier de commande 1 selon la flèche F1, comme montré sur la Fig. 6A. Au cours de ce mouvement, l'extrémité libre 13a du bras radial 13 du basculeur 10 est bloquée par le support de colonne 30 ce qui entraîne en rotation le basculeur 10 autour de l'axe de rotation 4 du levier de commande 1 selon un sens anti-horaire représenté par la flèche F2 sur la Fig. 6B.

Ce mouvement entraîne la rotation du basculeur 10 autour de l'axe de rotation 4 du levier de commande 1. Le pivotement du basculeur 10 permet de vaincre le frottement dû au serrage des organes de vissage 15 et entraîne chacun de ces organes de vissage 15 dans la portion 16b et 17b de plus forte section de chaque lumière 16 et 17. Les têtes 15c des organes de vissage 15 sont donc libres de passer à travers les lumières 16 et 17.

Simultanément, le pivotement du basculeur 10 provoque un mouvement de came entre les rampes 20 et les contre-rampes 21 ce qui provoque un mouvement d'écartement progressif en translation latérale du flasque de renvoi 5 sur le moyeu 7. La longueur de la partie externe 9 du moyeu 7 à l'intérieur de l'orifice 5a du flasque de renvoi 5 étant inférieure à la course de translation de ce flasque de renvoi 5 sur l'axe de rotation 4, le flasque de renvoi 5 et la tige de commande 6 se désolidarisent donc du moyeu 7 et du levier de commande 1 qui devient alors libre en rotation autour de l'axe 4 amenant la pédale 2 de ce levier de commande 1 à basculer selon la flèche F3 (Fig. 6C) vers l'avant du véhicule et entraînant une mise au plancher de la pédale 3 de freins ou d'embrayage par son propre poids ou à l'aide d'un ressort de torsion, non représenté.

Par conséquent, lors d'un choc frontal, la pédale 2 supportée par le levier de commande 1 se désolidarise complètement du système de freinage ou du système d'embrayage.

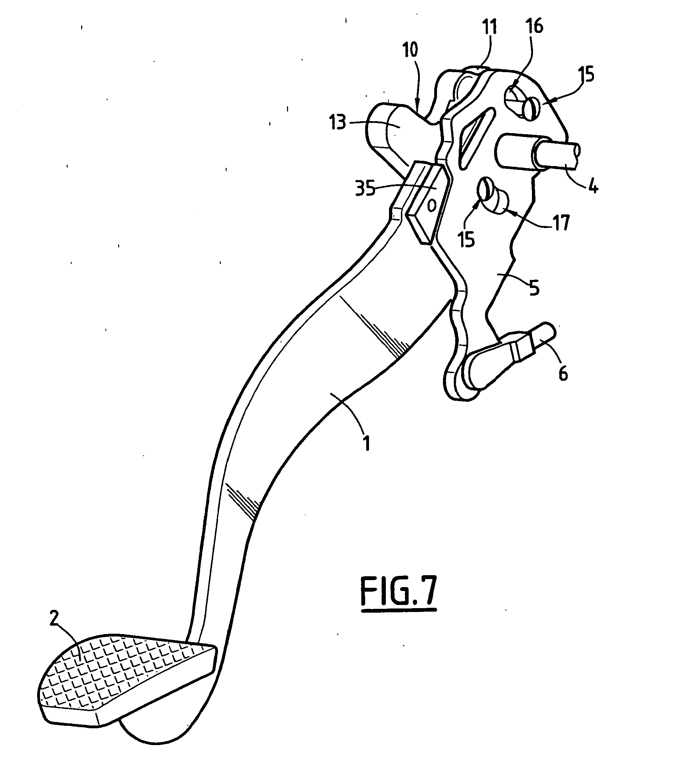

Sur la Fig. 7, on a représenté une première variante des moyens d'entraînement en rotation du flasque de renvoi 5 par le levier de commande 1, les éléments communs au premier mode de réalisation ayant été désignés par les mêmes références.

Dans ce mode de réalisation, les moyens d'entraînement en rotation du flasque de renvoi 5 par le levier de commande 1 sont formés par une butée 35 solidaire du levier de commande 1 et en appui sur un bord latéral du flasque de renvoi 5, lors de la rotation de ce levier de commande 1 et de ce flasque de renvoi 5 dans un sens d'actionnement de la tige de commande du système de frein ou d'embrayage. La butée 35 n'est pas fixée sur le flasque de renvoi 5. L'épaisseur de la butée 35 est inférieure à la course de translation latérale de ce flasque de renvoi sur l'axe de rotation 4. Par ailleurs, le moyeu 7 présente une section circulaire et les orifices 3a, 5a et 12 respectivement du flasque 3 du levier de commande 3, du flasque de renvoi 5 et du basculeur 10 présentent chacun une section circulaire de diamètre sensiblement égal au diamètre extérieur du moyeu 7.

Dans ce mode de réalisation lors d'un choc frontal du véhicule, le flasque de renvoi 5 se déplace en translation latérale sur l'axe de rotation 4 de manière identique au précédent mode de réalisation d'une course supérieure à l'épaisseur de la butée 35 et s'écarte donc de cette butée 35. De ce fait, le levier de commande 1 devient libre en rotation autour de l'axe 4, ce qui amène la pédale 3 à basculer vers l'avant du véhicule automobile par son propre poids ou à l'aide d'un ressort de torsion, non représenté.

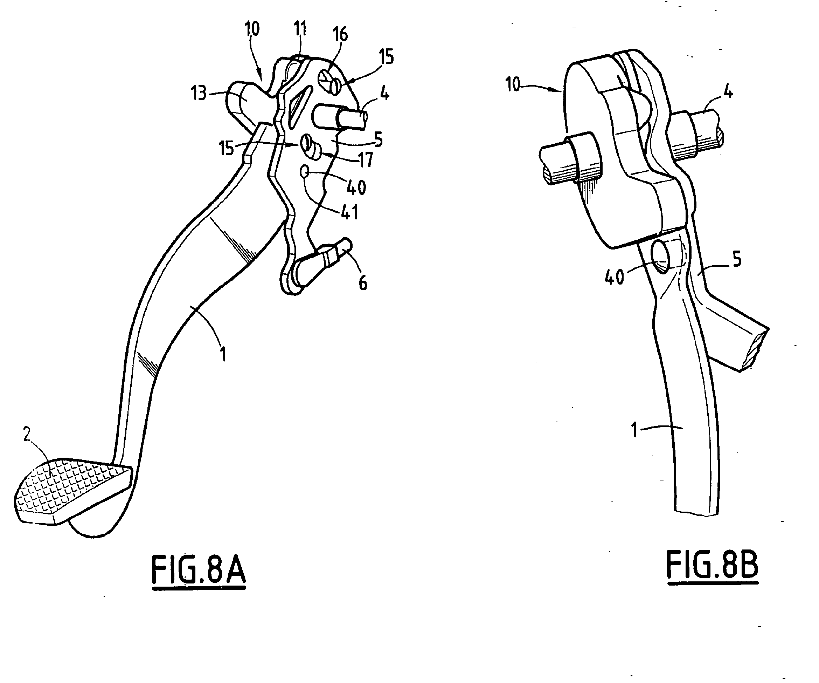

Sur les Figs. 8A et 8B, on a représenté une variante des moyens d'entraînement en rotation du flasque de renvoi 5 par le levier de commande 1, les éléments communs aux précédents modes de réalisation ayant été désignés par les mêmes références.

Dans ce mode de réalisation, les moyens d'entraînement en rotation du flasque de renvoi 5 par le levier de commande 1 sont formés par une tige 40 transversale parallèle à cet axe de rotation 4. Une première extrémité de cette tige 40 est solidaire du levier de commande 1 et une seconde extrémité de ladite tige 40 est engagée dans un orifice 41 ménagé dans le flasque de renvoi 5. Cette tige 40 n'est pas fixée dans le flasque de renvoi 5. De plus, la longueur d'engagement de la seconde extrémité de la tige 40 est inférieure à la course de translation latérale du flasque de renvoi 5 lors d'un choc frontal du véhicule automobile.

Ainsi, lors d'un choc frontal, le flasque de renvoi 5 se déplace transversalement sur l'axe de rotation 4 de la même manière que dans les précédents modes de réalisation et se désengage de la tige 40 si bien que le levier de commande 1 devient alors libre en rotation autour de l'axe 4 ce qui amène la pédale 2 supportée par le levier de commande 1 à basculer vers l'avant du véhicule automobile par son propre poids ou à l'aide d'une ressort de torsion, non représenté.

Dans la structure de pédalier selon l'invention, les moyens d'entraînement en rotation constitués par la partie externe 9 du moyeu 7 ou la butée 35 ou la tige 40 et les moyens de solidarisation du levier de commande 1, du flasque de renvoi 5 et du basculeur 10 constitués par les organes de serrage 15, sont indépendants les uns des autres.

Par ailleurs, le serrage du levier de commande 1, du flasque de renvoi 5 et du basculeur 10 entre eux peut être ajusté par le vissage plus ou moins important des organes de serrage 15 ce qui permet de régler l'effort à vaincre lors de la rotation du basculeur 10 au cours d'un choc frontal du véhicule automobile.

De plus, le basculeur 10 peut comporter une partie de liaison fusible, non représentée, avec le levier de commande de telle sorte que lors d'un choc frontal, l'effort à vaincre est constitué par la coupe de serrage des organes 15 et cette partie de liaison fusible.

Les différents éléments composant la structure de pédalier selon l'invention peuvent être réalisés en acier ou en matière plastique.

La structure de pédalier rétractable selon l'invention permet de limiter la remontée de chaque pédale en cas de choc frontal et ainsi d'améliorer la protection du conducteur.

## Revendications

1. Structure de pédalier pour un véhicule automobile, du type comprenant :
- un support de pédalier monté sur un tablier du véhicule,
- un levier de commande (1) d'une pédale (2) de frein et/ou d'embrayage, monté articulé sur ledit support et comportant un axe de rotation (4) horizontal,
- un flasque de renvoi (5) solidaire d'une tige de commande (6) des freins ou de l'embrayage et monté sur ledit axe (4),
- des moyens (7, 9 ; 35 ; 40) d'entraînement en rotation du flasque de renvoi (5) par le levier de commande (1),
- des moyens (10, 15) de solidarisation en translation latérale parallèlement à l'axe de rotation (4) du levier de commande (1) avec le flasque de renvoi (5),
- des moyens (16, 17, 20, 21) de désolidarisation du levier de commande (1) et du flasque de renvoi (5) en cas de choc frontal, par translation latérale de ce flasque de renvoi (5) pour amener ledit levier de commande (1) et la pédale (2) à basculer vers l'avant du véhicule, lesdits moyens (16, 17, 20, 21) de désolidarisation pivotant autour de l'axe de rotation (4) horizontal en cas de choc frontal.
**caractérisée en ce que** ces moyens (10, 15) de solidarisation sont indépendants des moyens (7, 9 ; 35 ; 40) d'entraînement en rotation.

2. Structure de pédalier selon la revendication 1, **caractérisée en ce que** les moyens d'entraînement en rotation sont formés par un moyeu (7, 9) placé sur l'axe de rotation (4) et reliant ledit levier de commande (1) audit flasque de renvoi (5), la longueur du moyeu (7, 9) à l'intérieur du flasque de renvoi (5) étant inférieure à la course de translation latérale de ce flasque de renvoi (5).

3. Structure de pédalier selon la revendication 1, **caractérisée en ce que** les moyens d'entraînement en rotation sont formés par une butée (35) solidaire du levier de commande (1) et en appui sur un bord latéral du flasque de renvoi (5) lors de la rotation de ce levier de commande (1) et de ce flasque de renvoi (5) dans un sens d'actionnement de la tige de commande (6), l'épaisseur de la butée (35) étant inférieure à la course de translation latérale de ce flasque de renvoi (5).

4. Structure de pédalier selon la revendication 1, **caractérisée en ce que** les moyens d'entraînement en rotation sont formés par une tige transversale (40), parallèle à l'axe de rotation (4), dont une première extrémité de cette tige (40) est solidaire du levier de commande (1) et dont une seconde extrémité est engagée dans un orifice (41) ménagé dans le flasque de renvoi (5), la longueur d'engagement de cette seconde extrémité étant inférieure à la course de translation latérale de ce flasque de renvoi (5).

5. Structure de pédalier selon l'une quelconque des revendications 1 à 4, **caractérisée en ce que** les moyens de solidarisation en translation latérale comprennent, d'une part, un basculeur (10) comportant un flasque (13) monté libre en rotation sur ledit axe de rotation (4) et muni d'un bras radial (12) destiné à coopérer avec une pièce fixe (30), solidaire de la structure du véhicule lors d'un choc frontal et, d'autre part, d'un système de serrage (15) du levier de commande (1) entre le flasque (11) du basculeur (10) et le flasque de renvoi (5).

6. Structure de pédalier selon la revendication 5, **caractérisée en ce que** le basculeur (10) est déplaçable par pivotement autour de l'axe de rotation (4) par la pièce fixe (30) lors d'un choc frontal entre une position de blocage du levier de commande (1) entre le flasque (11) du basculeur (10) et le flasque de renvoi (5) et une position de libération de ce levier de commande (1).

7. Structure de pédalier selon la revendication 5 ou 6, **caractérisée en ce que** le système de serrage comprend au moins un organe de vissage (15) transversal, parallèle à l'axe de rotation (4) et formé par une tige (15a) munie, à une première extrémité, d'une portion filetée vissée (15b) dans le flasque (11) du basculeur (10) et, à une seconde extrémité, d'une tête (15c) appliquée sur la face externe du flasque de renvoi (5).

8. Structure de pédalier selon la revendication 7, **caractérisée en ce que** les moyens de désolidarisation du levier de commande (1) et du flasque de renvoi (5) comprennent, d'une part, au moins une lumière (16, 17) ménagée dans le flasque de renvoi (5), traversée par la tige (15a) de l'organe de vissage (15) et comportant une première portion (16a, 17a) de largeur inférieure à la largeur de la tête (15c) de cet organe de vissage (15) et une seconde portion (16b, 17b) de largeur supérieure à ladite tête (15c) et, d'autre part, au moins un élément (20, 21) d'écartement du flasque de renvoi (5) parallèlement à l'axe de rotation (4).

9. Structure de pédalier selon la revendication 8, **caractérisée en ce que** les moyens de désolidarisation comprennent, de préférence, deux lumières (16, 17) ménagées dans le flasque de renvoi (5) et traversées chacune par la tige (15a) d'un organe de vissage (15), lesdites lumières (16, 17) étant disposées de part et d'autre de l'axe de rotation (4).

10. Structure de pédalier selon la revendication 8 ou 9, **caractérisée en ce que** ladite au moins lumière (16, 17) a la forme d'un arc de cercle dont le centre est situé sur l'axe de rotation (4).

11. Structure de pédalier selon la revendication 8, **caractérisée en ce que** ledit élément d'écartement du flasque de renvoi (5) est formé par au moins une rampe (20) et une contre-rampe (21) ménagées sur les faces en regard respectivement du flasque (11) du basculeur (10) et du flasque de renvoi (5) et coopérant l'une avec l'autre lors du pivotement de ce basculeur (10).

12. Structure de pédalier selon la revendication 8, **caractérisée en ce que** ledit élément d'écartement du flasque de renvoi est formé par au moins un organe élastique, comme par exemple un ressort de compression, interposé entre le levier de commande (1) et le flasque de renvoi (5).

13. Structure de pédalier selon l'une quelconque des revendications 5 à 12, **caractérisée en ce que** le basculeur (10) comporte une partie de liaison fusible avec le levier de commande (1).

14. Structure de pédalier selon l'une quelconque des revendications 5 à 13, **caractérisée en ce que** le levier de commande (1), le flasque de renvoi (5) et le basculeur (10) sont réalisés en matière plastique.

## Claims

1. Pedal assembly structure for a motor vehicle, of the type comprising:
- a pedal assembly support mounted on a base plate of the vehicle,
- a control lever (1) of a brake and/or clutch pedal (2), mounted in an articulated manner on said support and comprising a horizontal rotation shaft (4) ,
- a return flange (5) secured to a control rod (6) of the brakes or clutch and mounted on said shaft (4);
- means (7, 9; 35; 40) for driving the return flange (5) in rotation by means of the control lever (1),
- securing means (10, 15) for securing the control lever (1) to the return flange (5) in lateral translation in parallel to the rotation shaft (4),
- separating means (16, 17, 20, 21) for separating the control lever (1) and the return flange (5), in the event of frontal impact, by lateral translation of this return flange (5) for the purpose of causing said control lever (1) and the pedal (2) to tilt towards the front of the vehicle, said separating means (16, 17, 20, 21) pivoting about the horizontal rotation shaft (4) in the event of frontal impact,
**characterized in that** these securing means (10, 15) are independent of the means (7, 9; 35; 40) for driving in rotation.

2. Pedal assembly structure according to Claim 1,
**characterized in that** the means for driving in rotation are constituted by a hub (7, 9) which is arranged on the rotation shaft (4) and connects said control lever (1) to said return flange (5), the length of the hub (7, 9) inside the return flange (5) being less than the lateral translation travel of this return flange (5).

3. Pedal assembly structure according to Claim 1,
**characterized in that** the means for driving in rotation are constituted by a stop (35) which is secured to the control lever (1) and bears on a lateral edge of the return flange (5) upon the rotation of this control lever (1) and this return flange (5) in a direction of actuation of the control rod (6), the thickness of the stop (35) being less than the lateral translation travel of this return flange (5).

4. Pedal assembly structure according to Claim 1,
**characterized in that** the means for driving in rotation are constituted by a transverse rod (40), which is parallel to the rotation shaft (4), a first end of which rod (40) is secured to the control lever (1) and a second end of which is engaged in an opening (41) provided in the return flange (5), the length of engagement of this second end being less than the lateral translation travel of this return flange (5).

5. Pedal assembly structure according to any one of Claims 1 to 4, **characterized in that** the means for securing in lateral translation comprise, on the one hand, a tilter (10) which comprises a flange (13) mounted in a freely rotatable manner on said rotation shaft (4) and provided with a radial arm (12) designed to cooperate, in the event of a frontal impact, with a fixed part (30) which is secured to the structure of the vehicle, and, on the other hand, a clamping system (15) for clamping the control lever (1) between the flange (11) of the tilter (10) and the return flange (5).

6. Pedal assembly structure according to Claim 5,
**characterized in that**, in the event of a frontal impact, the tilter (10) can be displaced by the fixed part (30), by pivoting about the rotation shaft (4), between a position in which the control lever (1) is immobilized between the flange (11) of the tilter (10) and the return flange (5) and a position in which this control lever (1) is released.

7. Pedal assembly structure according to either of Claims 5 or 6, **characterized in that** the clamping system comprises at least one transverse screw-connection element (15), which is parallel to the rotation shaft (4) and constituted by a rod (15a) provided, at a first end, with a threaded portion (15b) screwed into the flange (11) of the tilter (10), and, at a second end, with a head (15c) applied to the outer face of the return flange (5).

8. Pedal assembly structure according to Claim 7,
**characterized in that** the means for separating the control lever (1) and the return flange (5) comprise, on the one hand, at least one slot (16, 17), which is provided in the return flange (5) and through which there extends the rod (15a) of the screw-connection element (15), and which comprises a first portion (16a, 17a) of a width less than the width of the head (15c) of this screw-connection element (15) and a second portion (16b, 17b) of a width greater than said head (15c), and, on the other hand, at least one spacing element (20, 21) for spacing the return flange (5) in parallel to the rotation shaft (4).

9. Pedal assembly structure according to Claim 8,
**characterized in that** the separating means comprise, preferably, two slots (16, 17) which are provided in the return flange (5) and through each of which there extends the rod (15a) of a screw-connection element (15), said slots (16, 17) being arranged on either side of the rotation shaft (4).

10. Pedal assembly structure according to either of Claims 8 or 9, **characterized in that** said at least one slot (16, 17) is in the form of a circular arc, the centre of which is located on the rotation shaft (4).

11. Pedal assembly structure according to Claim 8,
**characterized in that** said spacing element for spacing the return flange (5) is constituted by at least one ramp (20) and one counter-ramp (21) which are provided on the faces opposite the flange (11) of the tilter (10) and the return flange (5), respectively, and which cooperate with each other in the pivoting of this tilter (10).

12. Pedal assembly structure according to Claim 8,
**characterized in that** said spacing element for spacing the return flange is constituted by at least one elastic element, such as, for example, a compression spring, interposed between the control lever (1) and the return flange (5).

13. Pedal assembly structure according to any one of Claims 5 to 12, **characterized in that** the tilter (10) comprises a connection part which can be fused to the control lever (1).

14. Pedal assembly structure according to any one of Claims 5 to 13, **characterized in that** the control lever (1), the return flange (5) and the tilter (10) are made of plastic material.

## Patentansprüche

1. Pedalaufbau für ein Kraftfahrzeug, von der Art umfassend :
- einen Pedalträger, der auf eine Platte des Fahrzeugs,
- einen Steuerhebel (1) eines Brems - Pedals (2) und / oder eines Kupplungspedals (2), das angelenkt auf dem Träger montiert ist und eine horizontale Drehachse (4) umfasst,
- einen Führungsflansch (5), der einstückig mit dem Steuerstift (6) der Bremsen oder der Kupplung ist und auf der Achse (4) montiert ist,
- Drehantriebs - Mittel (7, 9; 35; 40) des Führungsflansches (5) durch den Steuerhebel (1);
- Lateraltranslations - Verbindungsmittel (10, 15), die parallel zur Drehachse (4) des Steuerhebels (1) mit dem Führungsflansch sind,
- Mittel (16, 17, 20, 21) zur Trennung des Steuerhebels (1) und des Führungsflansches (5) im Falle eines Frontalschocks, durch Lateraltranslation dieses Führungsflansches (5) um den Steuerhebel (1) und das Pedal (4) dazu zu bringen, das sie zur Vorderseite des Fahrzeugs hin kippen, wobei die Trenn - Mittel (16, 17, 20, 21) um die horizontale Drehachse im Falle eines Frontalschocks schwenkt
- **dadurch gekennzeichnet, dass** die Trennmittel (10, 15) unabhängig von den Drehantriebsmitteln (7, 9 ; 35 ; 40) sind.

2. Pedalaufbau nach Patentanspruch 1, **dadurch gekennzeichnet, dass** die Drehantriebsmittel durch eine Nabe (7, 9) gebildet werden, die auf der Drehachse angeordnet ist (4) und den Steuerhebel (1) mit dem Führungsflansch (5) verbinden, wobei die Länge der Nabe (7, 9) im Innern des Führungsflansches (5) kleiner als der Weg der Lateraltranslation dieses Führungsflansches (5) ist.

3. Pedalaulbau nach Patentanspruch 1, **dadurch gekennzeichnet, dass** die Drehantriebsmittel durch einen Anschlag (35) gebildet werden, die einstückig mit dem Steuerhebel (1) ist und auf einem Seitenrand des Führungsflansches (5) bei der Drehung dieses Steuerhebels (1) und dieses Führungsflansches (5) in einer Betätigungsrichtung des Steuerstiftes (6) ist, wobei die Dicke des Anschlages (35) kleiner als der Weg der Lateraltranslation dieses Führungsflansches (5) ist.

4. Pedalaufbau nach Patentanspruch 1, **dadurch gekennzeichnet, dass** die Drehantriebsmittel durch einen Transversalstift (40) gebildet werden, der parallel zur Drehachse (4) ist, von der ein erstes Ende dieses Stiftes (40) mit dem Steuerhebel (1) verbunden ist und von der ein zweites Ende in eine Öffnung (41) eingreift die in den Führungsflansch (5) eingearbeitet ist, wobei die Eingriffslänge dieses zweiten Endes kleiner als der Weg der Lateraltranslation dieses Führungsflansches (5) ist.

5. Pedalaufbau nach irgendeinem der vorangehenden Patentansprüche 1 bis 4, **dadurch gekennzeichnet, dass** die Lateraltranslations - Verbindungsmittel einerseits eine Kippvorrichtung (10) umfassen, die einen Flansch (13) umfasst, der frei auf der Drehachse (4) montiert und mit einem Radialarm (12) ausgerüstet ist, der dazu bestimmt ist, mit einem ortsfesten Teil (30) zusammenzuwirken, das einstückig mit dem Aufbau des Fahrzeugs bei einem Frontal - Schock ist und anderseits ein Klemmsystem (15) des Steuerhebels (1) zwischen dem Flansch (11) der Kippvorrichtung (10) und dem Führungsflansch (5) umfassen.

6. Pedalaufbau nach Patentanspruch 5, **dadurch gekennzeichnet, dass** bei einem Frontalschock die Kippvorrichtung (10) durch das Schwenken um die Drehachse (4) durch das ortsfeste Teil (30) zwischen einer Blockierungsstellung des Steuerhebels (1) zwischen dem Flansch (11) der Kippvorrichtung (10) und dem Führungsflansch (5) und einer Befreiungsstellung des Steuerhebels (5) beweglich ist.

7. Pedalaufbau nach Patentanspruch 5 oder 6, **dadurch gekennzeichnet, dass** das Klemmsystem mindestens ein Transversalschrauborgan (15) umfasst, das parallel zur Drehachse (4) und von einem Stift (15a) gebildet ist, der an einem ersten Ende mit einem in den Flansch (11) der Kippvorrichtung (10) geschraubten Gewindeteil (15b) und an einem zweiten Ende mit einem Kopf (15c) ausgerüstet ist, der an der Außenseite des Führungsflansches (5) anliegt.

8. Pedalaufbau nach Patentanspruch 7, **dadurch gekennzeichnet, dass** die Trennungsmittel des Steuerhebels (1) und des Führungsflansches (5) einerseits mindestens eine in den Führungsflansch (5) eingebrachte, vom Stift (15a) des Schrauborgans (15) durchdrungene Öffnung (16, 17) umfassen und einen ersten Teil (16a, 16b) mit einer Breite, die kleiner als die Breite des Kopfes (15c) dieses Schrauborgans (15) ist und einen zweiten Teil (15b, 17b) mit einer Breite die größer als der Kopf (15c) ist umfassen und andererseits mindestens ein Element (20, 21) zur Beabstandung des Führungsflansches (5) parallel zur Drehachse (4) umfassen.

9. Pedalaufbau nach Patentanspruch 8, **dadurch gekennzeichnet, dass** die Trennungsmittel bevorzugt zwei Öffnungen (16, 17) umfassen, die in den Führungsflansch (5) eingearbeitet sind und jede von dem Stift (15a) eines Schrauborgans (15) durchquert werden, wobei die Öffnungen (16, 17) auf beiden Seiten der Drehachse (4) angeordnet sind.

10. Pedalaufbau nach Patentanspruch 8 oder 9, **dadurch gekennzeichnet, dass** die mindestens eine Öffnung (16, 17) die Form eines Kreisbogens hat, dessen Zentrum auf der Drehachse (4) liegt.

11. Pedalaufbau nach Patentanspruch 8, **dadurch gekennzeichnet, dass** das Element zur Beabstandung des Führungsflansches (5) von mindestens einer Rampe (20) und einer Gegenrampe (21) gebildet werden, die auf den Seiten eingearbeitet sind, die jeweils dem Flansch (11) der Kippvorrichtung (10) und dem Führungsflansch (5) gegenüberliegen und miteinander beim Schwenken dieser Kippvorrichtung (10) zusammenwirken.

12. Pedalaufbau nach Patentanspruch 8, **dadurch gekennzeichnet, dass** das Element zur Beabstandung des Führungsflansches von mindestens einem elastischen Organ wie z.B. einer Kompressionsfeder zwischen dem Steuerhebel (1) und dem Führungsflansch (5) gebildet wird.

13. Pedalaufbau nach irgendeinem der Patentansprüche 5 bis 12, **dadurch gekennzeichnet, dass** die Kippvorrichtung (10) einen mit dem Steuerhebel (1) verschmelzbaren Verbindungsteil umfasst.

14. Pedalaufbau nach irgendeinem der Patentansprüche 5 bis 13, **dadurch gekennzeichnet, dass** der Steuerhebel (1), der Führungsflansch (5) und die Kippvorrichtung (10) aus Kunststoff hergestellt sind.
